# EUROPÄISCHE PATENTSCHRIFT

(11) **EP 1 289 000 B1**
(45) Veröffentlichungstag und Bekanntmachung des Hinweises auf die Patenterteilung: **15.10.2008**
(21) Anmeldenummer: 02102218.1
(22) Anmeldetag: 26.08.2002
(51) Int. Cl.: H01J 61/34, C03C 3/06, H01J 61/30

(54) **Entladungslampe und Aussenkolben hierfür**
Discharge lamp with outer envelope
Lampe à décharge avec ampoule externe

(30) Priorität: 28.08.2001 DE 10141961
(43) Veröffentlichungstag der Anmeldung: 05.03.2003
(73) Patentinhaber: Philips Intellectual Property & Standards GmbH, 20099 Hamburg (DE); Koninklijke Philips Electronics N.V., 5621 BA Eindhoven (NL)
(72) Erfinder: Kubon, Marcus, 52088 Aachen (DE); Schöneich, Jürgen, 52088 Aachen (DE); Hellwig, Paul, 52088 Aachen (DE)
(74) Vertreter: Volmer, Georg

(56) Entgegenhaltungen:
- EP-A- 0 019 327
- EP-A- 0 601 391
- US-A- 3 563 772
- US-A- 5 631 522
- US-A- 6 118 216

## Beschreibung

Die Erfindung betrifft eine Entladungslampe und einen Außenkolben für eine Entladungslampe.

Entladungslampen erzeugen Licht, indem in einem abgeschlossenen Entladungsgefäß, üblicherweise einem kleinen von einem Glasmantel umgebenen Volumen, eine elektrische Entladung erzeugt wird. Hierfür ist das Entladungsgefäß mit einem Gas gefüllt, das lichtemittierende Metalle, insbesondere Natrium, enthält. Durch Anlegen einer elektrischen Spannung wird, üblicherweise an zwei Elektroden, eine Entladung angeregt, die ein starkes Licht emittiert.

Es ist bekannt, die Entladungsgefäße derartiger Entladungslampen mit einer weiteren Hülle aus Glas zu umgeben. Beispielsweise bei Entladungslampen für Automobilscheinwerfer wird das eigentliche, oft oval geformte Entladungsgefäß häufig von einem Außenkolben umgeben, beispielsweise einem zylindrischen Glasröhrchen. Die Innenwände des Glasröhrchens sind häufig sehr eng, so dass der Abstand zum Entladungsgefäß teilweise sehr gering (beispielsweise 0,2 bis 1 mm) ist. Teilweise kann es auch zu einer Berührung von Entladungsgefäß und Außenkolben kommen. Der Außenkolben ist häufig fest mit Halteelementen des Entladungsgefäßes verbunden. Innerhalb des Außenkolbens befindet sich ein Gasvolumen, das üblicherweise mit Luft gefüllt ist.

Die Funktion der Hülle (Außenkolben) um das Entladungsgefäß besteht einerseits in einer thermischen Entlastung des Entladungsgefäßes. Das Entladungsgefäß erreicht im Betrieb hohe Temperaturen. Durch die Bildung einer Zone von hoher Temperatur im Inneren des Außenkolbens bilden sich im Bereich des Entladungsgefäßes keine so hohen Temperaturunterschiede, wie sie ohne Hülle auftreten würden. Eine andere Funktion des Außenkolbens ist häufig das Ausfiltern von UV-Strahlung aus dem Licht der Entladungslampe. Hierfür ist es bekannt, das Glasmaterial der Hülle mit verschiedenen Materialien zu dotieren, um die UV-Absorption zu verbessern.

In der US-A-5541471 ist eine auch als Beleuchtung für ein Automobil geeignete Entladungslampe beschrieben, bei der eine das Entladungsgefäß umgebende Hülle aus einem Quarzglas besteht, das mit den Elementen Cer, Titan, Europium und Aluminium dotiert ist, so dass es eine gute Durchlässigkeit für Licht aus dem sichtbaren Spektrum aufweist, aber ultraviolettes Licht absorbiert. Die Hülle in Form eines Glaskolbens umgibt hierbei das Entladungsgefäß.

EP-A-558270 beschreibt ebenfalls Lampen mit einer Hülle aus Quarzglas. Hochreiner Quarzsand wird mit TiO₂ und CeO₂ dotiert, um eine bessere Absorption von UV-Licht zu erreichen. Der verwendete Quarzsand enthält als Verunreinigungen verschiedene Elemente, darunter die Alkalimetalle K und Li zu 0,5 ppm und Na zu 0,6 ppm.

Andererseits ist es auch bekannt, das Glas der Hülle zu dotieren, um die Verarbeitungseigenschaften zu beeinflussen. In der EP-A-0601391 ist ein dotiertes Quarzglas und dessen Verwendung als Hüllkörper für Lampen beschrieben. Das Quarzglas enthält außer hochreinem SiO₂ vor allem Erdalkalioxide und Boroxid, um die Viskosität des Glases herabzusetzen. Wegen der Tendenz von Alkalioxiden, bei hoher Temperatur auszudampfen, wird vorgeschlagen, diese nur in geringen Mengen zuzusetzen, bevorzugt ganz darauf zu verzichten.

Beim Betrieb von Entladungslampen hat es sich als Problem erwiesen, dass die Eigenschaften der Lampe über die Betriebsdauer nicht konstant sind. So sinkt mit steigender Betriebsdauer die von der Lampe abgegebene Lichtmenge. Auch Farbverschiebungen sind zu beobachten.

EP-A-0583122 zeigt eine Gasentladungslampe mit einem äußeren Glaskolben und einem Entladungsgefäß. Als Ursache für die Veränderung der Eigenschaften der Lampe über die Lebensdauer, insbesondere eine Verschiebung der Farbe, wird die Diffusion von Natrium aus der Atmosphäre des Entladungsgefäßes angegeben. Um diesen Problem der Diffusion von Ionen zu begegnen, wird an der Innenseite des aus Glas hergestellten Entladungsgefäßes eine Schicht aus Metallsilikat aufgetragen.

US-A-5631522 beschreibt eine Gasentladungslampe mit einem Entladungsgefäß. Um die Diffusion von Natrium aus dem Entladungsgefäß zu vermeiden, wird eine spezielle Zusammensetzung für das Glas des Entladungsgefäßes vorgeschlagen, nämlich hochreines Quarzglas oder synthetisches Siliziumoxid dotiert mit je 20 bis 1000 ppm Yttrium oder Cäsium, bevorzugt in Kombination mit Aluminiumoxid. Es wird angegeben, daß das Vorhandensein von Alkalimetallen im Glas des Entladungsgefäßes die Diffusion begünstigt.

In der US-A-3563772 ist ein Glasmaterial für ein Entladungsgefäß einer Natriumdampflampe beschrieben, das der Einwirkung von Natriumdampf bis 600°C widerstehen kann. Das Material enthält gemäß verschiedener Rezepturen einen SiO₂-Anteil von 14 - 43% und im übrigen als weitere Bestandteile u. a. CaO, BaO, BeO, MgO, Li₂O, Na₂O in einer molaren Gesamtmenge von 42 - 52,5%.

In der US-A-6118216 ist eine Entladungslampe beschrieben. In einem Entladungsgefäß wird eine elektrische Entladung erzeugt. Das Entladungsgefäß ist von einer äußeren Hülle umgeben. Das Material der Hülle ist UV-absorbierendes Bor-Silikat-Crlas. Außer diversen anderen Bestandteilen enthält es neben SiO₂ 2 - 5 wt-% Na₂O, 1,3 - 4 wt-% K₂O und 0 - 0,3 wt-% Li₂O. Dieses Glasmaterial wird mit verschiedenen anderen Borsilikatgläsern mit SiO₂-Anteil von 74,0 - 76,1 wt-% und Na₂O-Anteil von 2,9 - 3,9% verglichen hinsichtlich des dichtenden Abschlusses an Wolfram-Material, der thermischen und mechanischen Eigenschaften sowie der UV-Absorption.

In der EP-A-964431 ist ebenfalls eine Entladungslampe mit einem Entladungsgefäß und einem Außenkolben beschrieben. Das Material des Außenkolbens umfaßt 90 - 99,88 wt-% SiO₂. An weiteren Bestandteilen sind Alkalimetalle und Erdalkalimetalle angebeben. Diese sollen in einer Konzentration von besonders bevorzugt weniger als 0,03 wt-% vorhanden sein.

Es ist Aufgabe der Erfindung, eine Entladungslampe mit einem Außenkolben anzugeben, wobei die Lampe über ihre Lebensdauer möglichst stabile Eigenschaften hat.

Die Aufgabe wird gelöst durch eine Entladungslampe nach Anspruch 1 und eine Entladungslampe nach Anspruch 2. Abhängige Ansprüche beziehen sich auf vorteilhafte Ausführungsformen der Erfindung.

Überraschenderweise hat sich herausgestellt, daß die Änderung der Eigenschaften über einen langen Betriebszeitraum von beispielsweise zweitausend Stunden Brenndauer durch geeignete Wahl des Materials der das Entladungsgefäß umgebenden Hülle entscheidend beeinflußt werden kann. Dies ist vor allem deshalb überraschend, weil diese Hülle, im folgenden auch bezeichnet als Außenkolben, keinen direkten Kontakt mit der eigentlichen Entladung hat. Es ist somit ein Vorteil der Erfindung, daß am eigentlichen Entladungsgefäß keine aufwendige Behandlung, beispielsweise Aufbringen von Sperrschichten notwendig ist. Das Entladungsgefäß kann nach den übrigen Vorgaben optimiert werden, ohne daß auf das Problem der Diffusion von Na-Ionen gesondert geachtet wird. Bevorzugt ist die Hülle im Abstand vom Entladungsgefäß angeordnet, wobei zwischen dem Entladungsgefäß und der Hülle ein Volumen verbleibt. Dieses Volumen kann abgeschlossen sein. Bevorzugt ist es mit Luft gefüllt.

Erfindungsgemäß ist das Glasmaterial der Hülle dotiert mit einer geringen Menge Natrium. Es wird davon ausgegangen, dass sich im Betrieb hierbei folgende Reaktion abspielt: Wie das eigentliche Entladungsgefäß, wird auch - insbesondere bei engen Außenkolben - die Hülle sehr heiß. Die Temperatur kann dabei auf über 650 °C steigen. Hierbei kommt es zu einer Ausdiffusion des Na aus dem Material der Hülle, so daß dieses sich in dem Volumen zwischen Entladungsgefäß und Hülle befindet. Diese Konzentration wirkt der Diffusion von Natrium-Ionen aus dem Entladungsgefäß entgegen.

Erfindungsgemäß soll Natrium in einer Konzentration von mindestens 10 ppm, bezogen auf das Gewicht, im Glasmaterial der Hülle vorhanden sein. Eine Obergrenze für den Na-Gehalt wird vorgegeben durch die benötigten Eigenschaften des Glases, insbesondere dessen Verarbeitbarkeit und Temperaturstabilität. Gemäß Anspruch 2 wird für Lampen, bei denen der Außenkolben (wegen der hohen Temperatur des Entladungsgefäßes und des geringen Abstandes) sich auf über 650 °C aufheizt, ein Na-Gehalt von weniger als 3000 ppm gewählt, bevorzugt weniger als 2000 ppm. Besonders bevorzugt wird eine Konzentration von mindestens 30 ppm.

Gemäß Anspruch 1 ist vorgesehen, daß das Material der Hülle weitere Alkalimetalle (außer Natrium) nur in sehr geringer Konzentration enthält. Die Summe der Alkalimetalle (außer Na) soll höchstens 25 ppm, besonders bevorzugt sogar weniger als 15 ppm betragen. Gemäß Anspruch 2 beträgt die Konzentration von Kalium maximal 10 ppm, bevorzugt sogar weniger als 6 ppm.

Hintergrund hierfür ist die Rolle, die Alkalimetalle, insbesondere Kalium, bei der Ausdiffusion der Na-Ionen aus dem Entladungsgefäß vermutlich spielen. Diese Alkalimetalle können bei der hohen Temperatur der Hülle im Betrieb ebenfalls verdampfen und an der Oberfläche des Innenkolbens gegen Na-Atome ausgetauscht werden. So wird die Diffusion von Na-Ionen begünstigt.

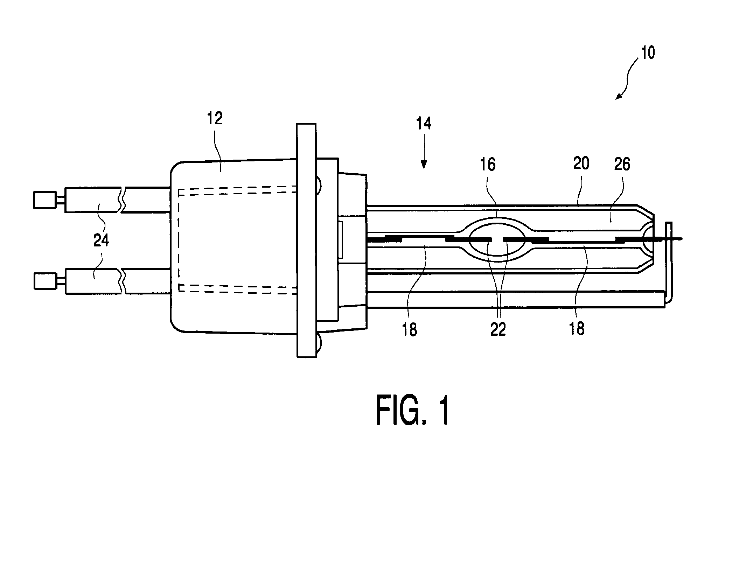

Nachfolgend wird eine Ausführungsform der Erfindung anhand einer Zeichnung näher beschrieben. Hierbei zeigt
- Fig. 1: eine Seitenansicht einer Ausführungsform einer erfindungsgemäßen Entladungslampe.

In Figur 1 ist eine Entladungslampe 10 in Seitenansicht dargestellt. Die Entladungslampe 10 umfasst einen Sockel 12 und einen Brenner 14. Der Brenner 14 umfasst ein Entladungsgefäß 16, Zuführungen 18 und einen Außenkolben 20.

Das Entladungsgefäß 16 und die Zuführungen 18 sind als einstückiger Glaskörper ausgebildet. In den Zuführungen 18 sind elektrische Leiter angeordnet, die mit Elektroden 22 im inneren Volumen des Entladungsgefäßes 16 verbunden sind. Durch Anlegen einer Spannung an Anschlüsse 24, die mit den Elektroden 22 verbunden sind, kann im Inneren des Entladungsgefäßes 16 eine Gasentladung erzeugt werden.

Um das Entladungsgefäß 16 herum ist der Außenkolben 20 als abgeschlossene Glashülle angeordnet. An beiden Enden (in Figur 1 ist nur das vordere Ende des Außenkolbens 20 sichtbar) ist der aus Glasmaterial bestehende Außenkolben 20 im erweichten Zustand an die Zuführungen 18 angerollt, so dass ein abgeschlossenes Volumen 26 zwischen Außenkolben 20 und Entladungsgefäß 16 gebildet ist. Dieses Volumen ist mit Luft gefüllt.

Die Entladungslampe 10 aus Figur 1 ist etwa 8 cm lang. Die Länge des Brenners beträgt etwa 5 cm. Das ovale Entladungsgefäß 16 hat einen maximalen Durchmesser von ca. 6 mm. Der Innendurchmesser des Außenkolbens 20 beträgt ca. 7 mm, so dass das Entladungsgefäß 16 den Außenkolben 20 nicht berührt, sondern lediglich über die Zuführungen 18 mechanisch fest mit diesem verbunden ist.

Im Inneren des Entladungsgefäßes befindet sich eine spezielle Gasfüllung, die lichtgebende Substanzen (Salze), wie z. B. Alkalihalogenide (NaJ, NaBr) enthält. Die Zusammensetzung der Füllung bestimmt sowohl Lichtausbeute als auch den Farbort der Entladung.

Im Betrieb erzeugt die Lampe 10 ein helles Licht durch eine Gasentladung zwischen den Elektroden 22. Hierbei stellt sich eine hohe Betriebstemperatur ein. Insbesondere das Glasmaterial des Entladungsgefäßes 16 heizt sich auf über 1000°C auf. Auch der Außenkolben 20 heizt sich auf über 650 ° Celsius auf.

Der Aufbau der beschriebenen Lampe ist beispielhaft zu verstehen. Dem Fachmann sind außer dem dargestellten Typ noch eine Vielzahl weiterer Gestaltungen von Entladungslampen bekannt. Die Besonderheit der dargestellten Lampe besteht in dem Material der das Entladungsgefäß 16 umgebenden Hülle, die hier als Außenkolben 20 ausgebildet ist.

Außenkolben 20 ist aus einem speziellen Glasmaterial gefertigt. Es handelt sich um Quarzglas mit bestimmten Zusätzen.

Hierzu wurden Versuche durchgeführt, bei denen die Eigenschaften von Lampen mit Außenkolben aus verschiedenen Glasmaterialien über die Lebensdauer der Lampen verglichen wurden. Es wurden die Veränderung des Farborts und der Lichtmenge bei ansonsten konstanten Bedingungen nach 15 Stunden bzw. 2000 Stunden Brenndauer miteinander verglichen.

Die Ergebnisse sind in der folgenden Tabelle zusammengefasst:

| **Elementgehalte (ppm)** | | **Material A** | **Material B** |
|---|---|---|---|
| | K | 2500 | 5 |
| | Li | < 1,5 | < 1,5 |
| Summe Alkali ohne | Na | 2500 | 7 |
| | Na | < 1,5 | 65 |
| | | | |
| **Lampenstabilität 15h-2000h:** | | | |
| Farbort (Δ*x*/Δ*y*)*1000 | | -32/-24 | -11/-17 |
| Lichtmenge (bzgl. 15h) | | 66 % | 77 % |

Es wird deutlich, dass bei Material B, einem Quarzglas aus hochreinem SiO₂ dotiert mit den aufgeführten Alkalimetallen, eine deutlich geringere Veränderung der Lampeneigenschaften über die Lebensdauer beobachtet wird. Sowohl der Verlust an Lichtmenge als auch die Verschiebung des Farbortes sind bei Material B erheblich geringer als bei Material A. Verantwortlich sind der niedrige Gehalt an Alkalimetallen (außer Na), insbesondere Kalium, sowie die Dotierung des Materials des Außenkolbens 20 mit einer geringen Menge (hier: 65 ppm) Natrium, die der Diffusion von Na-Ionen aus dem Inneren des Entladungsgefäßes entgegenwirken.

Aufgrund der erhöhten Lichtmengenstabilität sowie emittierten Farbortwanderung ist die Austauschbarkeit von Lampen untereinander (z. B. bei teilweiser Ersetzung einer Lampe nach einem Unfall) erheblich besser gewährleistet als bei herkömmlichen Lampen (Material A).

Verfahren zur Herstellung von Glasmaterialien mit den entsprechenden Konzentrationen an Dotierstoffen sind dem Fachmann hinlänglich bekannt, Entsprechend dotierte Glasmaterialien (z. B. Corning Vycor) sind zudem im Handel erhältlich.

Durch die bei Material B im Vergleich zu Material A geringe Dotierung mit Kalium ergibt sich zudem der Vorteil, dass das Material des Außenkolbens härter ist. Hierdurch kommt es bei der Anlagerung von Verunreinigungen an den Außenkolben oder bei Berührung des Außenkolbens 20 mit dem Entladungsgefäß 16 nicht so leicht zu einer unerwünschten Kristallisation.

Die Erfindung lässt sich dahingehend zusammenfassen, dass eine Entladungslampe vorgestellt wird mit einem abgeschlossenen Entladungsgefäß zur Erzeugung einer elektrischen Entladung und einer Hülle aus Glas, die das Entladungsgefäß umgibt. Um über die Lebensdauer der Lampe möglichst konstante Eigenschaften zu erzielen, wird vorgeschlagen, dass das Glasmaterial der Hülle mit Natrium in einer Konzentration von mindestens 10 ppm, bevorzugt mindestens 30 ppm dotiert ist. Gemäß einer Weiterbildung wird vorgeschlagen, dass weitere Alkalimetalle (außer Natrium) in einer Konzentration von höchstens 25 ppm enthalten sind. Überraschenderweise wird durch entsprechende Wahl des mit der eigentlichen Entladung nicht unmittelbar in Kontakt stehenden Außenkolbens die Diffusion von Natrium aus dem Entladungsgefäß verringert. Zudem hat das Material des Außenkolbens eine geringere Neigung zur Kristallisation.

## Patentansprüche

1. Entladungslampe (10) mit
einem abgeschlossenen Entladungsgefäß (16) zur Erzeugung einer elektrischen Entladung
- und einer Hülle (20) aus Glas, die das Entladungsgefäß (16) umgibt,
- wobei das Glasmaterial der Hülle (20) dotiert ist mit Natrium in einer Konzentration von mindestens 10 ppm, bezogen auf das Gewicht,
**dadurch gekennzeichnet, dass**
- das Glasmaterial der Hülle (20) außer Natrium weitere Alkalimetalle in einer Konzentration von insgesamt höchstens 25 ppm, bezogen auf das Gewicht, enthält.

2. Entladungslampe (10) mit
- einem abgeschlossenen Entladungsgefäß (16) zur Erzeugung einer elektrischen Entladung
- und einer Hülle (20) aus Glas, die das Entladungsgefäß (16) umgibt,
**dadurch gekennzeichnet, dass**
- sich im Betrieb an der Hülle (20) eine Temperatur von mehr als 650 °C einstellt,
- das Glasmaterial der Hülle (20) dotiert ist mit Natrium in einer Konzentration von 10 bis 3000 ppm, bezogen auf das Gewicht,
- und das Glasmaterial der Hülle (20) Kalium in einer Konzentration von höchstens 10 ppm, bezogen auf das Gewicht, enthält.

3. Entladungslampe nach einem der vorangehenden Ansprüche, bei dem
- das Glasmaterial der Hülle (20) Natrium in einer Konzentration von mindestens 30 ppm, bezogen auf das Gewicht, enthält.

## Claims

1. A discharge lamp (10) comprising
a closed discharge vessel (16) for generating an electric discharge,
- and a glass envelope (20) surrounding the discharge vessel (16),
- in which the glass of the envelope (20) is sodium doped in a concentration of at least 10 ppm referred to the weight,
**characterized in that**
- the glass of the envelope (20) in addition to the sodium contains further alkali metals in a concentration of a maximum of 25 ppm referred to the weight.

2. A discharge lamp (10) comprising
- a closed discharge vessel (16) for generating an electric discharge,
- and a glass envelope (20) surrounding the discharge vessel (16),
**characterized in that**
- in operation a temperature of more than 650°C is encountered at the envelope (20),
- the glass of the envelope (20) is sodium doped in a concentration from 10 to 3000 ppm referred to the weight,
- and the glass of the envelope (20) contains potassium in a concentration of a maximum of 10 ppm referred to the weight.

3. A discharge lamp as claimed in any one of the preceding claims, in which
- the glass of the envelope (20) contains sodium in a concentration of at least 30 ppm referred to the weight.

## Revendications

1. Lampe à décharge (10) avec
- un tube de décharge (16) fermé pour la production d'une décharge électrique
- et une enveloppe (20) en verre qui entoure la tube de décharge (16),
- la matière en verre de l'enveloppe (20) étant dopée en sodium dans une concentration d'au moins 10 ppm par rapport au poids,
**caractérisée en ce**
- **que** la matière de verre de l'enveloppe (20) contient, en plus du sodium, d'autres métaux alcalins dans une concentration de 25 ppm maximum au total, par rapport au poids.

2. Lampe à décharge (10) avec
- un tube de décharge (16) fermé pour la production d'une décharge électrique
- et une enveloppe (20) en verre qui entoure le tube de décharge (16),
**caractérisée en ce**
- **qu**'une température de plus de 650°C s'installe sur l'enveloppe (20) en service;
- que la matière de verre de l'enveloppe (20) est dopée au sodium dans une concentration de 10 à 3000 ppm par rapport au poids,
- et que la matière de verre de l'enveloppe (20) contient du potassium dans une concentration de 10 ppm maximum au total, par rapport au poids.

3. Lampe à décharge selon l'une des revendications précédentes, dans laquelle
- la matière en verre de l'enveloppe (20) contient du sodium dans une concentration d'au moins 30 ppm par rapport au poids.
